# EUROPEAN PATENT APPLICATION

(11) **EP 1 291 364 A2**
(43) Date of publication of application: **12.03.2003**
(21) Application number: 01127399.2
(22) Date of filing: 23.11.2001
(51) Int. Cl.: C08F 2/22, C08F 2/44

(54) **Method for the manufacture of exfoliated polymer/silicate nano-composites**

(30) Priority: 11.09.2001 KR 2001055942
(71) Applicant: Korea Advanced Institute of Science and Technology, Taejeon 305-701 (KR)
(72) Inventor: Choi, Yong Suk, Yuseong-ku, Taejeon 305-762 (KR); Kim, Yoon Kyung, Jung-ku, Taejeon 301-120 (KR); Chung, In Jae, Kangnam-ku, Seoul 135-110 (KR)
(74) Representative: Schweitzer, Klaus, Dr.

(57) **Abstract**

Disclosed is a method for producing polymer/silicate nano-composites via emulsion polymerization, which comprises the steps of:
(1) forming initial particles from a layered silicate and a monomer provided for high molecular weight polymerization using a reactive emulsifying agent containing a functional group having affinity for the layered silicate; and
(2) emulsion polymerizing the initial particles formed in step (a) while providing additionally monomer using a stabilizer,
to form exfoliated polymer/silicate nano-composites.

## Description

The present invention relates to a method for the manufacture of exfoliated polymer/silicate nanocomposites. More specific the present invention relates to a method for the manufacture of polymer/silicate nanocomposites having an exfoliated structure which method comprises using pure silicates which are not organic substituted.

Polymer nano-composites show excellent mechanical properties and size stability, and reduced permeability towards various gases, even when a small amount of silicate is added to those polymer nano-composites, unlike the known micro-composites. Furthermore, polymer-layered silicate nano-composites show an excellent thermal stability and are self fire-extinguishing. This property can be attributed to the lamella structure of the silicate, which provides a high aspect ratio and a large area to interact with polymers.

Due to their good properties, polymer-layered silicate nano-composites are expected to be applicable to various industrial fields. Indeed, in the United States, Europe, Japan, and other countries commercialization of the polymer-layered silicate nano-composites is in progress, and some of them have already been made commercially available. For example, Toyota (Japan) has commercialized the first nylon-layered silicate nano-composites for use as timing-belt covers in automobiles. However, in practice, it is not simple to produce polymer-layered silicate. Since the layered silicates are highly hydrophilic, they are not miscible with common hydrophobic polymers. Accordingly, intercalation of polymers cannot readily be performed. In most cases, the layered silicates are treated with alkylammonium to make them hydrophobic and the polymers are then intercalated between layers of the silicates to produce nano-composites.

Many methods for producing such organic substituted polymer-layered silicates are known. There is a method in which liquid monomers or monomers which are dissolved in a solvent are intercalated to organically modified silicates, immediately followed by polymerization to produce nano-composites (see, for example, A. Usuki, M. Kawasumi, Y. Kojima, A. Okada, T. Kurauchi and O. Kamigaito, J. *Mater. Res.,* 8, 174 (1993)). This method is advantageous in that various monomers can be used to produce polymer silicates. Another method which is a solution intercalation method involves intercalating polymers dissolved in solvents between the layers of lamella type silicates (see, Ruiz-Hitzky and P. Aranda, Adv. *Ma ter.,* 2, 545 (1990)). Giannelis et al. of Cornell University developed a method for producing polymer-layered silicate nano-composites via a solution intercalation method including directly intercalating molten polymers into the spaces between layered silicates (see, R. A. Vaia, H. Ishii and E. P. Giannelis, *Chem. Mater.,* 5, 1694 (1993)). Recently, a method for producing polymer-layered silicate composites via synthesis of silicates in the presence of polymers was reported (see, K. A. Carrado, P. Thiyagarajan and D. L. Elder, *Clays Clay Miner.,* 44, 506 (1996)).

Also, there have been attempts to produce exfoliated silicate nano-composites by melt-intercalating or solutionpolymerizing polymers into silicates which have first been organically modified so that they became more compatible with the hydrophobic polymers. However, when alkylammonium, which comprises the majority of the employed organic substituents, is used in an excessive amount, it may later migrate to surfaces of the nano-composites, leading to toxicity of the nano-composites. Therefore, manufacturers either need a process to substitute silicates with organic molecules such as alkyl ammoniums, or else they must purchase organically modified silicates. In the latter cases, additional costs for purchasing organically substituted silicates or for removing the toxicity of the silicates are incurred, which increases total production cost of polymer-silicate nano-composites, thereby reducing competitiveness of the product.

In order to overcome the above problems, the present invention uses pure silicates and a reactive emulsifying agent for the preparation of polymer/silicate nano-composites. Thus, in one embodiment of the present invention there is provided a method for producing exfoliated polymer/silicate nano-composites from a pure, i.e. pristine silicate via emulsion polymerization using water, which is commonly used as a medium for polymerization. This method for the manufacture of exfoliated polymer/silicate nano-composites via emulsion polymerization comprises the steps of:
(1) forming initial particles from a layered silicate and a monomer provided for high molecular weight polymerization using a reactive emulsifying agent containing a functional group having affinity for the layered silicate; and
(2) emulsion polymerizing the initial particles formed in step (a) while providing additional monomer using a stabilizer.

The above objects, and other features and advantages of the present invention will become more apparent in the light of the following detailed description specifically in combination with the drawings. Fig. 1 shows an X-ray diffraction analysis of exfoliated polystyrene/silicate nano-composites prepared according to the method described in Example 1 and Example 2, in which curve (a) represents nano-composites of Example 1 and curve (b) represents nano-composites of Example 2. Fig. 2 shows a thermal gravimetric analysis (TGA) of the polystyrene/silicate nano-composites prepared according to the method described in Example 1 and Fig. 3 shows a graph of storage modulus of polystyrene without silicate, polystyrene/silicate nano-composites and polystyrenemethylmethacrylate copolymer/silicate nano-composites at varying temperatures.

The present invention provides a method for producing exfoliated polymer/silicate nano-composites via emulsion polymerization, which method comprises the steps of:
(1) forming initial particles from a layered silicate and a monomer provided for high molecular weight polymerization using a reactive emulsifying agent containing a functional group having affinity for the layered silicate; and
(2) emulsion polymerizing the initial particles formed in step (a) while providing additional monomer using a stabilizer.

Step (a) in which initial particles are formed is the step which determines the number of emulsion polymer particles in the polymerization system. Usually, this step is performed by adjusting the amount of the initial monomer added in a concentration range that does not obstruct the stability of the polymerization reaction. The amount of the initial monomer added for formation of the initial particles is generally 1 to 50 parts by weight based on the total amount of added monomers. If the amount of the initial monomer is added in an amount less than 1 part by weight, the number of the produced particles is small and thus the rate of polymerization is lowered. On the other hand, if the added amount of the initial monomer is more than 50 parts by weight, the polymerization temperature is raised during the formation of the initial particles, which may cause the rate of reaction to increase very fast due to Trommsdorff's effect (gel effect). However, the aforementioned range of the added amount of the initial monomer is based on limitations disclosed in the pertinent art.

The silicates which can be used in the present invention are not particularly limited as long as they have a structure of lamella. However, for the purpose of facilitating the permeation of polymers between the layers of the silicates, it is preferred to use silicates having an average interlamellar spacing in the range of 7 to 12 Å, and which is also excellent in cation exchange effect.

Specific examples of silicates which satisfy the above requirements include montmorillonite, hectorite, saponite, fluorohectorite, and the like. These silicates can be applied alone or in any combination thereof depending on the needs of the users.

The monomers which can be used in the polymerization according to the present invention comprise any monomer which is commonly used in the preparation of nano-composites. These include, for example, styrenes or styrene copolymers. Also, any monomer which is copolymerizable with styrene, for example, methylmethacrylate, butylacrylate, butadiene, isobutylacrylate, isoprene, hydroxyethylmethylacrylate and the like, can be used. These monomers can be used alone or in combinations of any two or more thereof. The reactive emulsifying agent for mediating the polymerization preferably contains a functional group having affinity to the vinyl group and silicate, yet it is not necessarily limited to those. Such an emulsifying agent, for example, may include an amide group, sulfone group, or the like. Reactive emulsifying agents having such functional groups have a strong affinity for silicates. Therefore, they can facilitate the intercalation of the monomers between the layers of the silicates. The following are examples of reactive emulsifying agents containing functional groups:
2-acrylamido-2-methyl-1-propane sulfonic acid (hereinafter referred to as AMPS), (3-acrylamidopropyl)trimethylammonium chloride, [2-(acryloyloxy)ethyl]trimethylammonium methyl sulfate, vinylbenzyltrimethylammonium chloride, 3-acrylamido-3-methylbutyltrimethylammonium chloride, N,N-dialkylaminoethylacrylate, N,N-dialkylaminoethylmethacrylate, N,N-dimethylaminoethylacrylate, N,N-dialkylaminoethylmethacrylate, N,N-dimethylaminoethylacrylate, N,N-dimethylaminoethylmethacrylate, N,N-dimethylaminomethylacrylamide, N,N-dimethylaminopropylmethacrylamide, 2-methacrylamidopropyltrimetylammonium chloride and the like. These compounds can be used alone or in combinations of any two or more thereof.

The polymerization initiator which can be used in the emulsion polymerization according to the present invention is not particularly limited. Any polymerization initiator commonly used in the emulsion polymerization is adequate. Such an initiator may be selected from one or more of, for example, ammonium sulphate, potassium sulphate, azobisisonitrile, cumene hydroxyperoxide and benzyloxide.

The monomers added in step (b), after formation of the initial particles, serve to compensate for lacks of monomers in the growing particles. The addition of these monomers is carried out by suitably adjusting the injection rate so that the injected monomers can be polymerized in the particles. The injection rate is based on limitations known to the skilled person and described in the prior art (for example, step 3 of Gardon's Theory ; J.L.Gardon, J.Polym.Sci., Pt A-1, 1968, 6). For the emulsion polymerization, which is performed after the initial particles have been formed, a stabilizer is needed, which is able to promote the diffusion of the later added monomers into the inside of the particles. Such a stabilizer includes one or more compounds selected from the group consisting of anionic emulsifying agents such as linear alkylbenzenesulfonate compounds in which the main chain comprises alkyl group or ethylene oxide, nonionic emulsifying agents, rosin soaps, and fat soaps. Specific examples of the anionic emulsifying agents include sodium dodecylbenzenesulfonic acid, sodium laurylic acid, sodium decylsulfonic acid, sodium dodecylsulfonic acid, rosin, and combinations of any two or more thereof. Specific examples of the nonionic emulsifying agents include, N-triethoxylated nonaneamides, decylmethylsulfoxide, p-dodecylmaltocides, and combinations of any two or more thereof.

Now, the method for producing exfoliated polymer/silicate nano-composites via emulsion polymerization according to the present invention is described in detail. Montmorilonite, one of the lamellar type silicates which can be used in the present invention, is dispersed in distilled water to form a dispersion. 1 to 20 parts by weight of the resulting dispersion, and 0.1 to 5 parts by weight of potassium sulfate as a polymerization initiator, 1 to 50 parts by weight of styrene as a monomer, 50 to 450 parts by weight of distilled water as a dispersion solvent, 0.1 to 30 parts by weight of AMPS as a reactive emulsifying agent are given into a polymerization reactor. The reaction mixture is polymerized while being stirred, to form initial particles.

The temperature of the reactor must be higher than the decomposition temperature of the used initiator. Thus, when using potassium sulfate as initiator which has a decomposition temperature of 40 °C or higher, the temperature of the reactor should be higher than 40 °C. Usually, polymerization conversion rapidly increases as the polymerization rate is raised. Therefore, preferably, the polymerization temperature for forming the initial particles is 50 to 85 °C.

It is not necessary to particularly limit the added amount of the reactive emulsifying agent. However, when using too little of the reactive emulsifying agent, the exfoliation of silicates cannot be smoothly performed. On the other hand, when using it in an excessive amount, the viscosity of the polymerization reaction system increases and as a result too much low molecular weight oligomers are formed. Taking this into consideration, the amount of reactive emulsifying agent was adjusted to the aforementioned range. However, the foregoing range is not meant to be a critical limitation for the present invention.

After the formation of the initial particles, a stabilizer, e.g. an anionic emulsifying agent such as sodium dodecylbenzenesulfonic acid, is added to the reactor in an amount of 0.1 to 5 parts by weight. Subsequently, the rest of the monomer is continuously or portion-wise added to the reactor, followed by the addition of 0.1 to 5 parts by weight of a polymerization initiator such as potassium sulfate. Thus, the rest of the monomer undergoes polymerization, thereby forming nano-composites in a high concentration.

The polymerization temperature upon addition of the rest of the monomer is generally the same or higher than that of the initial polymerization step. The injection rate of the monomer is adjusted so that the polymerization conversion of the growing particles is in a range of 85 to 100%. In this way, there are few or no monomers trapped in the inner part of the particles and thus stable particles can be produced. If the monomer is added at once, the stability of the polymers is poor, leading to aggregation of particles.

The advantages of the emulsion polymerization according to the present invention are:
(1) The interlamellar spacing of the silicate is increased in water as dispersion medium. This provides an environment in which monomers of low molecular weight can permeate into the spaces between the layered silicates;
(2) no harmful organic solvents are used in the present method;
(3) organic substitution of the silicates can be eliminated by employing a reactive emulsifying agent containing a functional group having affinity for silicates;
(4) mass production of nano-composites can be realized and thus commercialization is possible.

The polymer/silicate nano-composites according to the present invention have excellent thermal properties. Accordingly, they are applicable in fields demanding heat resistance or size stability. Also, the polymer/silicate nano-composites are of the exfoliated type, where the silicates are exfoliated and distributed evenly throughout the polymers. Consequently, the interactions between the silicates and polymers are increased, yielding in improved mechanical properties. Thus, the nano-composites according to the present invention can be used as composite materials with light inorganic substances resulting in excellent mechanical properties.

The present invention will now be described with reference to Examples.

### Example 1

### Preparation of exfoliated polystyrene-silicate nano-composites using a reactive emulsifying agent

5 g of montmorillonite (Kunipia-F, Cunimine Co., CEC= 119 meq/100) was added to 145 ml of distilled water. The mixture was stirred for 24 hours at room temperature so that the montmorillonite was evenly distributed in the distilled water.

15 parts by weight of the resulting dispersion of montmorillonite was given into a reactor together with 10 parts by weight of a 1% aqueous solution of potassium sulfate as a polymerization initiator, 25 parts by weight of styrene as a monomer, 200 parts by weight of three times distilled water, and 1.5 parts by weight (0.3 g) of AMPS as a reactive emulsifying agent. The reaction mixture was stirred in nitrogen atmosphere at room temperature for 1 hour so that the ingredients were evenly distributed in distilled water.

After completion of the dispersal, the temperature of the reactor is raised to 65 °C. Polymerization of the initial particles was performed for 1 hour while the temperature of the reactor was kept at constant temperature. Then, 10 parts by weight of a 10% aqueous solution of sodium dodecylbenzenesulfonic acid as a stabilizer was added to the reactor by means of a syringe. While keeping the temperature constant 75 parts by weight of styrene were continuously injected over 2 hours through a syringe equipped with an injection pump. After completion of the injection of monomers, 10 parts by weight of an aqueous solution of potassium sulfate was added to the reactor. The temperature of the reactor was raised to 85 °C and kept at that temperature for 4 hours so that the residual monomers were polymerized via emulsion polymerization.

The resulting polystyrene/silicate nano-composites were dried in a freeze dryer for about one week and then in a vacuum oven at 100 °C for 24 hours or more.

### Example 2

### Preparation of exfoliated polystyrene methylmethacrylate copolymer-silicate nano-composites using a reactive emulsifying agent

5 g of montmorillonite (Kunipia-F, Cunimine Co., CEC= 119 meq/100) was added to 145 ml of distilled water. The mixture was stirred for 24 hours at room temperature so that the montmorillonite was evenly distributed in the distilled water.

15 parts by weight of the resulting dispersion of montmorillonite was given into a reactor along with 10 parts by weight of a 1% aqueous solution of potassium sulfate as a polymerization initiator, 25 parts by weight of a mixture of methylmethacrylate and styrene in a ratio of 50:50 as monomers, 200 parts by weight of distilled water, and 1.5 parts by weight (0.3 g) of AMPS as a reactive emulsifying agent. The reaction mixture was stirred in nitrogen atmosphere at room temperature for 1 hour so that the ingredients were evenly distributed in distilled water.

After completion of the dispersal, the temperature of the reactor was raised to 65 °C. Polymerization of initial particles was performed for 1 hour while the temperature of the reactor was kept at constant temperature. Then, 10 parts by weight of a 10% aqueous solution of sodium dodecylbenzenesulfonic acid as a stabilizer was added to the reactor by means of a syringe. While keeping the temperature constant 75 parts by weight of a 50:50 mixture of methylmethacrylate and styrene were continuously injected over 2 hours through a syringe equipped with an injection pump. After completion of the injection of monomers, 10 parts by weight of an aqueous solution of potassium sulfate was added to the reactor. The temperature of the reactor was raised to 85 °C and kept at that temperature for 4 hours so that the residual monomers were polymerized via emulsion polymerization. The resulting polystyrene-methylmethacrylate copolymer/silicate nano-composites were dried in a freezing dryer for about one week and then in a vacuum oven at 100 °C for 24 hours or more.

Using a mixture of methylmethacrylate and styrene as monomers, methylmethacrylate readily distributes toward the inside of the silicate and is copolymerized with styrene, exfoliating the silicates.

### Confirmation of Exfoliated Structure

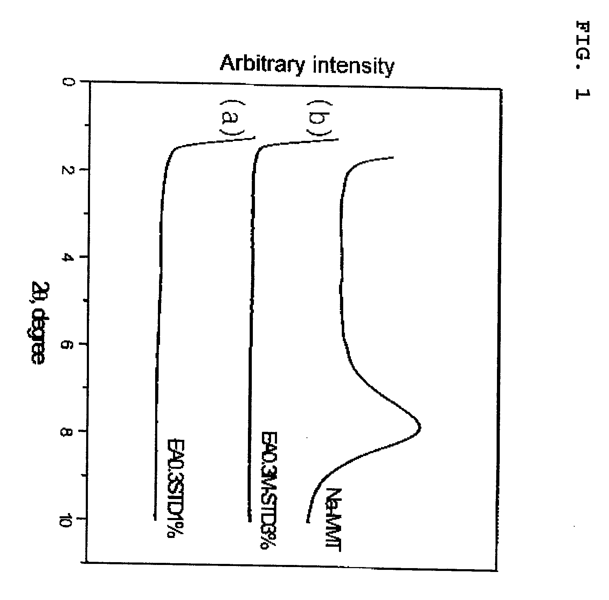

The polystyrene/silicate nano-composites of Example 1 and the polystyrene methylmethacrylate copolymer/silicate nano-composites of Example 2 were examined for their interlamellar spacing according to X-ray diffraction analyses using Rigaku X-ray generator, an X-ray diffraction analyzer (CuK_{α} radiation, λ = 0.15406 nm). The results are shown in Fig. 1, in which E represents Extracted, A represents AMPS, and the number after A represents the added amount of the reactive emulsifying agent (g), M represents methylmethacrylate (MMA), S represents styrene, T represents sodium montmorillonite (Na-MMT), D represents anionic emulsifying agent (sodium dodecylbenzenesulfonic acid, DBS-Na), and the ∼ after D represents the weight proportion of sodium montmorillonite in the nano-composites.

In Fig. 1, the curve (a) shows the results of the X-ray diffraction spectrum for polystyrene/silicate nano-composites synthesized in Example 1. The results were obtained at a diffraction angle (2θ) of 1.2 to 10° and a scanning speed of 2°/min to measure the variation of the interlamellar spacing. In order to remove low molecular weight oligomers and moisture which may show a broad lattice spacing, the nano-composites were extracted with THF using a Soxhlet extraction apparatus for 12 hours prior to the examination of the X-ray diffraction spectrum. In the results, no peak indicating regular interlamellar spacings was observed. Therefore, the synthesis of exfoliated polystyrene/silicate nano-composites is confirmed. The curve (b) shows the results of the X-ray diffraction spectrum for polystyrene-methylmethacrylate copolymer/silicate nano-composites synthesized in Example 2. Likewise, no peak indicating regular interlamellar spacings was observed. Therefore, the synthesis of exfoliated polystyrenemethylmethacrylate copolymer /silicate nano-composites is confirmed.

### Thermal Propeties

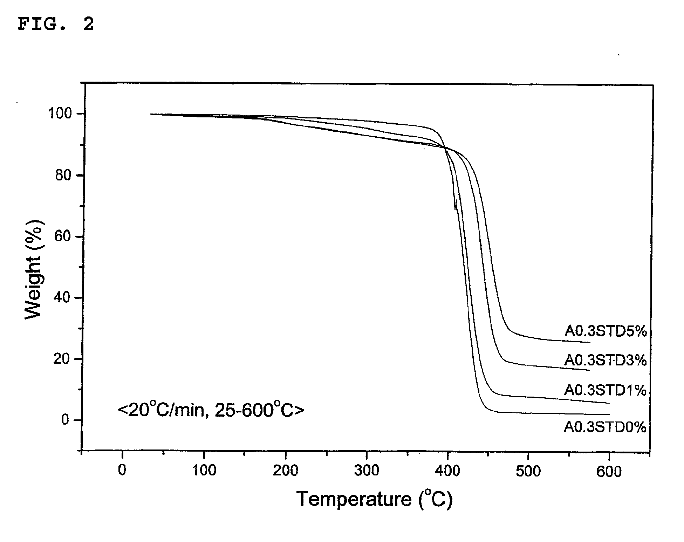

The exfoliated polystyrene/silicate nano-composites prepared according to the method described in Example 1 were examined for their thermal properties by thermogravimetric analysis (TGA) while varying the amount of silicates. The results are shown in Fig. 2. The reduction of weight near 180 °C is due to the decomposition of AMPS. The diagram reveals that as the content of silicates is increased, the decomposition temperature of polystyrene in the nano-composites shifts toward higher temperatures. This shows that the polystyrene/silicate nano-composites produced according to the present invention can be applied in industrial fields demanding superior thermal properties and size stability.

### Mechanical Properties

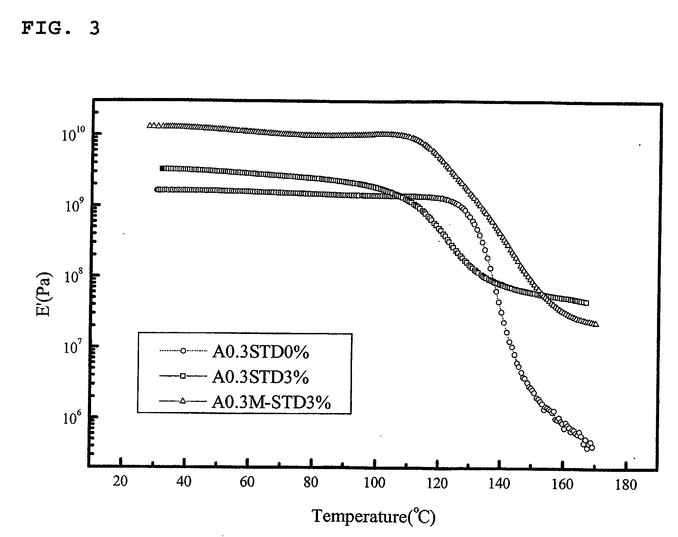

The polystyrene/silicate nano-composites according to Example 1 and the exfoliated polystyrene methylmethacrylate copolymer/silicate nano-composites according to Example 2, and polystyrene particles synthesized according to Example 1 but without silicate, as a reference, were examined for their elastic modulus at various temperature. The results are shown in Fig. 3. Measurements were obtained at temperatures varying from 30 to 170°C at a rate of 4°C/min. Compared to polystyrene (AO.3STD0%), the polystyrene/silicate nano-composite (AO.3STD3%) shows an increase of 95% in elastic modulus and the exfoliated polystyrene-methylmethacrylate copolmer shows an increase of 660% in elastic modulus.

Summarizing, the exfoliated polymer nano-composites according to the present invention have thermal properties superior to the intercalated nano-composites. This is believed to be due to the distribution degree of the silicates within the nano-composites. Even though silicate is used in the same amount, when the silicate is exfoliated and evenly distributed throughout the polymers, the interactions between the silicate and the polymer are increased, yielding in excellent mechanical properties. Therefore, the exfoliated nano-composites according to the present invention can be used as composite materials containing light inorganic substances in applications requiring excellent mechanical properties.

## Claims

1. Method for the manufacture of polymer/silicate nano-composites via emulsion polymerization, comprising the steps of:
(1) forming initial particles from a layered silicate and a monomer provided for high molecular weight polymerization using a reactive emulsifying agent containing a functional group having affinity for the layered silicate; and
(2) emulsion polymerizing the initial particles formed in step (a) while providing additionally monomer using a stabilizer.

2. The method according to claim 1, wherein the layered silicate has an average interlamellar spacing of 7 to 12 Å.

3. The method according to claim 1 or 2, wherein the layered silicate is selected from one or more elements of the group consisting of montmorillonite, hectorite, saponite and fluorohectorite.

4. The method according to one of claims 1 to 3, wherein an initiator for emulsion polymerization is used.

5. The method according to claim 4, wherein the initiator is selected from one or more elements of the group consisting of ammonium sulfate, potassium sulfate, azobisisonitrile, cumene hydroxyperoxide and benzyloxide.

6. The method according to one of claims 1 to 5, wherein the monomer comprises styrenes or styrene copolymers.

7. The method according to one of claims 1 to 6, wherein the reactive emulsifying agent comprises a vinyl group.

8. The method according to one of claims 1 to 7, wherein the reactive emulsifying agent comprises an amide group or sulfone group.

9. The method according to one of claims 1 to 8, wherein the reactive emulsifying agent is selected from one or more elements of the group consisting of 2-acrylamido-2-methyl-1-propane sulfonic acid (AMPS), (3-acrylamidopropyl)trimethylammonium chloride, [2-(acryloyloxy)ethyl]trimethylammonium methyl sulfate, vinylbenzyltrimethylammonium chloride, 3-acrylamido-3-methylbutyltrimethylammonium chloride, N,N-dialkylaminoethylacrylate, N,N-dialkylaminoethylmethacrylate, N,N-dimethylaminoethylacrylate, N,N-dialkylaminoethylmethacrylate, N,N-dimethylaminoethylacrylate, N,N-dimethylaminoethylmethacrylate, N,N-dimethylaminomethylacrylamide, N,N-dimethylaminopropylmethacrylamide, and 2-methacrylamidopropyltrimetylammonium chloride.

10. The method according to one of claims 1 to 9, wherein the stabilizer is selected from one or more elements of the group consisting of anionic emulsifying agents, nonionic emulsifying agents, rosin soaps and fat soaps.

11. The method according claim 10, wherein the anionic emulsifying agent is a linear alkylbenzenesulfonate compound in which the main chain comprises an alkyl group or ethylene oxide.

12. The method according to claim 10 or 11, wherein the anionic emulsifying agent is selected from one or more elements of the group consisting of sodium dodecylbenzenesulfonic acid, sodium laurylic acid, sodium decylsulfonic acid, sodium dodecylsulfonic acid and rosin.

13. The method according to claim 10, wherein the nonionic emulsifying agent is selected from one or more elements of the group consisting of N-triethoxylated nonaneamides, decylmethyleulfoxide and p-dodecylmaltocides.

14. The method according to claim 6, wherein the styrene copolymers comprise copolymers of styrene with at least one element selected from the group consisting of methylmethacrylate, butylacrylate, butadiene, isobutylacrylate, isoprene and hydroxyethylmethylacrylate.
